# EUROPEAN PATENT APPLICATION

(11) **EP 2 436 542 A1**
(43) Date of publication of application: **04.04.2012**
(21) Application number: 10190041.3
(22) Date of filing: 04.11.2010
(51) Int. Cl.: B60G 17/04

(54) **Air spring type suspension**

(30) Priority: 29.09.2010 KR 20100094074; 29.09.2010 KR 20100094075; 21.10.2010 KR 20100103000; 21.10.2010 KR 20100103002
(71) Applicant: S & T Daewoo Co., Ltd., Gijang-gun, Busan 619-873 (KR)
(72) Inventor: Lee, Dong-Rak, 614-795, Busan (KR); Kim, Jung-Gon, 611-082, Busan (KR)
(74) Representative: Nobbe, Matthias

(57) **Abstract**

The invention refers to an air spring type suspension (30) including: a cylinder (32) including an air chamber (32a); an outer tube (34) surrounding the cylinder (32) and constituting a buffer chamber (34a) outside the cylinder (32), the buffer chamber (34a) connected to the air chamber (32a); a damper (36) capable of being inputted into and outputted from the air chamber (32a); a piston rod (38) in the air chamber (32a) and inserted into the damper (36); and an accumulator module (40) constituting a control chamber (40a) connected to the buffer chamber (34a), wherein a single closed space is constituted by the air chamber (32a), the buffer chamber (34a) and the control chamber (40a), and wherein a pressure change of the air chamber (32a) is induced by a pressure change of the control chamber (40a).

## Description

### BACKGROUND OF THE INVENTION

### Field of the Invention

The present invention relates to an air spring type suspension, and more particularly, to an air spring type suspension where elements controlling a pressure of an air chamber are integrated as one body: This application claims the benefit of Korean Patent Application No. 10-2010-0094074, filed on September 29, 2010, No. 10-2010-0094075, filed on September 29, 2010, No. 10-2010-0103000, filed on October 21, 2010, and No. 10-2010-0103002, filed on October 21, 2010, which are hereby incorporated by reference in their entirety

### Discussion of the Related Art

A suspension system for a vehicle is used for a stable drive and a comfortable ride by absorbing a shock and an impact transmitted from a road surface through an axle and keeping a balance of a car body between the axle and the car body on the drive.

The suspension system for a vehicle includes a suspension absorbing an impact, an arm controlling an operation of a wheel and a link. The suspension includes an elastic means buffering the impact and a damper attenuating the shock of the elastic means. The elastic means are classified into a rigid body spring type where the impact is buffered by a material property and a shape of a rigid body spring such as a coil spring and a plate spring that has a predetermined elastic coefficient and an air spring type where the impact is buffered by a property of a gas.

Since the air spring type elastic means have advantages such as a superior elastic function and a rare generation of a minute shock due to buffering as compared with the rigid body spring type elastic means, the air spring type elastic means are widely used for a high-class vehicle. Further, the suspension system including the air spring type elastic means may have a balancing function that controls a vehicle height or keeps a balance of the car body to correspond to the slope of the road surface by changing a pressure of an operation gas.

In a truck or a crossover vehicle, a live load of the vehicle greatly changes according to the loaded freight as well as the number of the passengers and a load pressure applying to the suspension system also greatly changes. Accordingly, the suspension system including the air spring type elastic means may have a leveling function that keeps a constant vehicle height by changing a reference pressure (a constant pressure corresponding to only a dead load of a vehicle in a stop state) according to the live load.

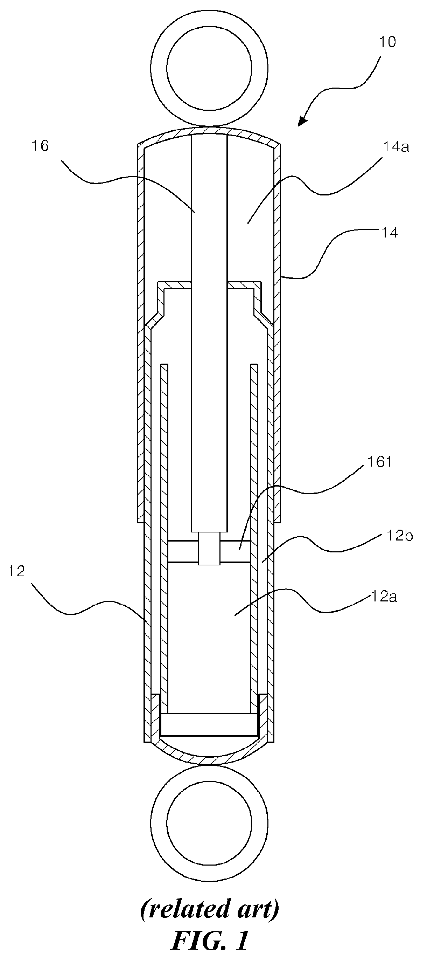

FIG. 1 is a cross-sectional view showing an air spring type suspension according to the related art. In FIG. 1, the air spring type suspension 10 includes a damper 12, a cylinder 14 combined with the damper 12 to constitute an air chamber 14a and a piston rod 16 inserted into the damper 12. The damper 12 has a dual structure including inner and outer chambers 12a and 12b. The air chamber 14a is filled with an operation gas such as an air or a nitrogen gas, and the damper 12 is filled with an operation oil. A piston valve 161 adjusting a flow state of the operation oil is formed at an end portion of the piston rod 16.

In the air spring type suspension 10, a vertical directional impact occurred on the drive is primarily absorbed by the air chamber 14a filled with the operation gas, and the attenuating function for the shock occurred during the absorbing procedure of the air chamber 14a and the secondary absorbing function for the vertical directional impact are performed by the damper 12 filled with the operation oil.

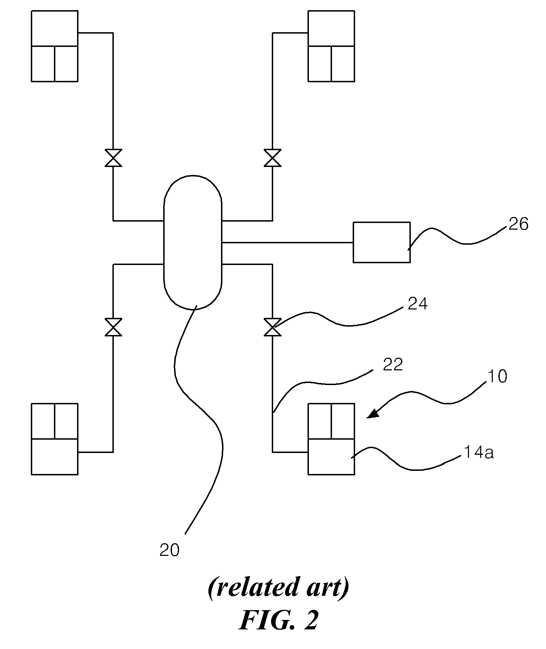

FIG. 2 is a view showing a suspension system including an air spring type suspension according to the related art. In FIG. 2, the suspension system includes a plurality of suspensions 10 each having an air chamber 14a, a surge tank 20 connected to each air chamber 14a through an air pipe 22, a regulating valve 24 formed in each air pipe 22 and adjusting a supply of an air from the surge tank 20 to each air chamber 14a of the suspensions 10, a pressure sensor (not shown) measuring a pressure of each air chamber 14a and a controller 26 controlling operation of the surge tank 20 and the regulating valves 24 based on a data of the pressure sensor.

In the suspension system according to the related art, the operation gas is transmitted from the surge tank 20 to the air chamber 14a of the suspension 10 or the operation gas is from the air chamber 14a of the suspension 10 to the surge tank 20 by the combinational operation of the surge tank 20, the regulating valve 24 and the controller 26. As a result, the vehicle height and the slope of the car body may be changed, and the vehicle height may be kept constant independently of change in the live load through the leveling function.

However, since the single surge tank 20 supplies the operation gas to the plurality of suspensions 10 through the air pipe 22, there exist a limit in design of the car body due to the structure of the air pipes 22 connected between the surge tank 20 and each suspension 10 and the structure of the vehicle becomes complicated. Moreover, since the surge tank 20 and each suspension 10 are connected through each air pipe 22, an inherent buffering function of the suspension 10 as well as a controlling function for the air chamber 14a of the suspension 10 may not be performed when the operation gas is leaked due to the breakdown of the air pipe 22.

Furthermore, an immediate reaction of the suspension 10 according to the change of the road surface is one of the most important factors in the balancing function where the balance of the car body is kept to correspond to the slope of the road surface on the drive. In the suspension system according to the related art, however, since the surge tank 20 and each suspension 10 are separated from each other, an interval time for transmitting the operation gas between the surge tank 20 and each suspension 10 is required to control the pressure of each suspension 10 and the immediate reaction may be hardly obtained. Accordingly, an efficiency in fabrication of the vehicle is reduced and the suspension system according to the related art has disadvantages in performing various functions using the air spring type suspension.

### SUMMARY OF THE INVENTION

Accordingly, the present invention is directed to an air spring type suspension that substantially obviates one or more of the problems due to limitations and disadvantages of the related art.

An advantage of the present invention is to provide an air spring type suspension that has advantages in the design efficiency and the stable drive for a vehicle.

Additional features and advantages of the invention will be set forth in the description which follows, and in part will be apparent from the description, or may be learned by practice of the invention. These and other advantages of the invention will be realized and attained by the structure particularly pointed out in the written description and claims hereof as well as the appended drawings.

To achieve these and other advantages and in accordance with the purpose of the present invention, as embodied and broadly described, an air spring type suspension includes: a cylinder including an air chamber; an outer tube surrounding the cylinder and constituting a buffer chamber outside the cylinder, the buffer chamber connected to the air chamber; a damper capable of being inputted into and outputted from the air chamber; a piston rod in the air chamber and inserted into the damper; and an accumulator module constituting a control chamber connected to the buffer chamber, wherein a single closed space is constituted by the air chamber, the buffer chamber and the control chamber, and wherein a pressure change of the air chamber is induced by a pressure change of the control chamber.

In another aspect, an air spring type suspension includes: a cylinder including an air chamber; an outer tube surrounding the cylinder and constituting a buffer chamber connected to the air chamber outside the cylinder; a damper capable of being inputted into and outputted from the air chamber; a piston rod disposed in the air chamber and inserted into the damper; a plunger movable in the buffer chamber and dividing an inner space of the buffer chamber to define an effective pressure space connected to the air chamber, a volume of the effective pressure space changed according to a movement of the plunger; and a driving means for moving the plunger, wherein a single closed space is constituted by the air chamber and the erective pressure space, and wherein a pressure change of the air chamber is induced by a movement of the plunger.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a cross-sectional view showing an air spring type suspension according to the related art;

FIG. 2 is a view showing a suspension system including an air spring type suspension according to the related art;

FIG. 3 is a perspective view showing an air spring type suspension according to a first embodiment of the present invention;

FIG. 4 is a side view showing an air spring type suspension according to a first embodiment of the present invention;

FIG. 5 is a rear view showing an air spring type suspension according to a first embodiment of the present invention;

FIGs. 6A and 6B are cross-sectional views showing pressurization and depressurization operation states, respectively, in an air chamber of an air spring type suspension according to a first embodiment of the present invention;

FIGs. 7 and 8 are perspective views showing an air spring type suspension according to a second embodiment of the present invention; and

FIGs. 9A and 9B are cross-sectional views showing pressurization and depressurization operation states, respectively, in an air chamber of an air spring type suspension according to a second embodiment of the present invention.

### DETAILED DESCRIPTION OF THE ILLUSTRATED EMBODIMENTS

Reference will now be made in detail to embodiments of the present invention, examples of which are illustrated in the accompanying drawings. Wherever possible, similar reference numbers will be used to refer to the same or similar parts.

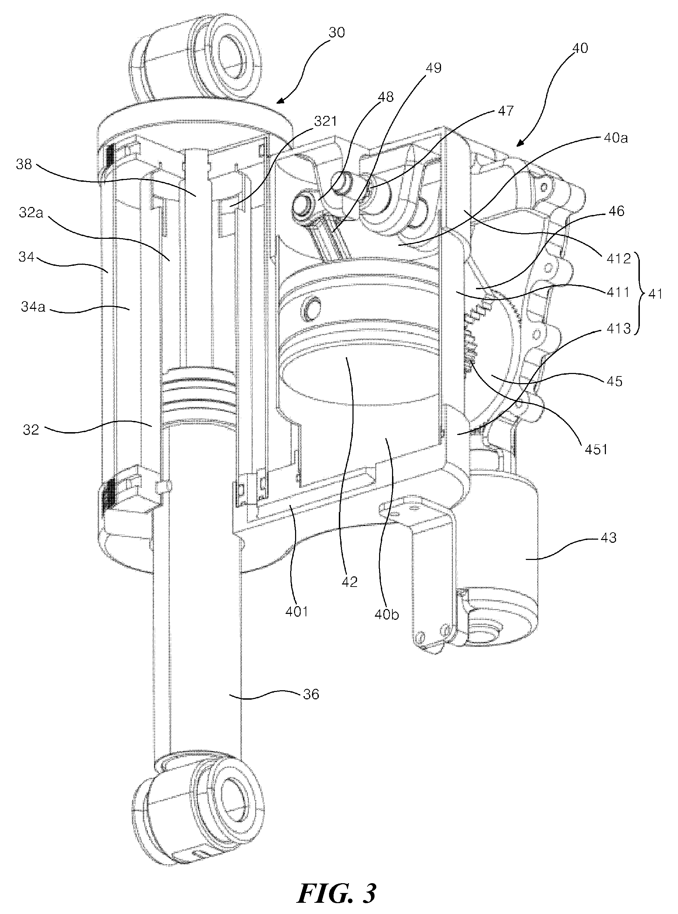

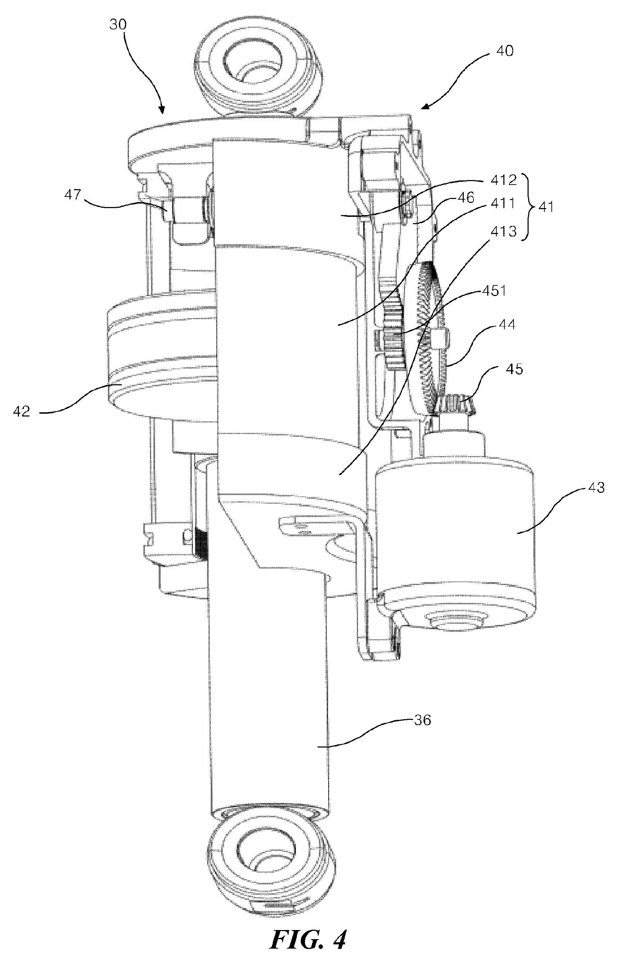

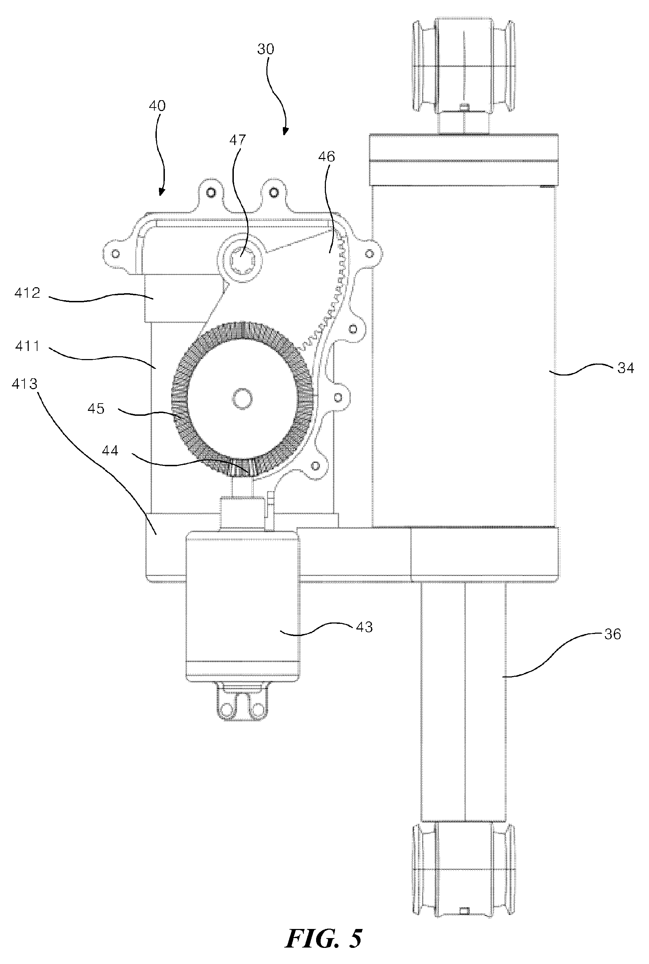

FIGs. 3, 4 and 5 are a perspective view, a side view and a rear view, respectively, showing an air spring type suspension according to a first embodiment of the present invention.

In FIGs. 3, 4 and 5, an air spring type suspension 30 includes a cylinder 32 having an air chamber 32a filled with an operation gas, an outer tube 34 surrounding the cylinder 32 and constituting a buffer chamber 34a connected to the air chamber 32a outside the cylinder 32, a damper 36 capable of being inputted into and outputted from the air chamber 32a of the cylinder 32, a piston rod 38 disposed in the air chamber 32a of the cylinder 32 and inserted into the damper 36 and an accumulator module 40 constituting a control chamber 40a connected to the buffer chamber 34a.

A plurality of airing holes 321 are formed at an upper portion of the cylinder 32, and the air chamber 32a and the buffer chamber 40a are connected to each other through the plurality of airing holes 321 to constitute an air ventilation system. The accumulator module 40 includes a chamber housing 41 outside the outer tube 34 and constituting the control chamber 40a therein, a piston 42 movable up and down in the control chamber 40a of the chamber housing 41 and a driving means for moving the piston 42. In addition, the chamber housing 41 is disposed to contact an outer surface of the outer tube 34, and an airing path 401 connecting the buffer chamber 34a and the control chamber 40a is formed in the chamber housing 41 so that a bottom surface of the control chamber 40a can be connected to a lower portion of the buffer chamber 34a.

The piston 42 divides an inner space of the control chamber 40a to define an effective pressure space 40b (a space between an end portion of the piston 42 and the airing path 401 in the control chamber 40a) connected to the buffer chamber 34a. A volume of the effective pressure space 40b is changed according to movement of the piston 42 and the volume change of the effective pressure space 40b causes a pressure change of the buffer chamber 34a.

The chamber housing 41 may include a cylinder tube 411 having a length corresponding to a stroke of the piston 42, an upper cover 412 covering a top portion of the cylinder tube 411 and a lower cover 413 covering a bottom portion of the cylinder tube 411. The lower cover 413 of the chamber housing 41 may be integrated with a bottom surface of the outer tube 34 as one body so that the chamber housing 41 is disposed adjacent to the outer tube 34 without an additional connection means. Further, the airing path 401 connecting the control chamber 40a and the buffer chamber 34a may be formed in the lower cover 413 of the chamber housing 41.

The driving means may include a motor 43, a reduction gear unit connected to a drive shaft of the motor 43 and reducing rotation of the drive shaft, a rotation shaft 47 rotated by the reduction gear unit and a crank means converting a rotational movement of the rotation shaft 47 into a linear movement and transmitting the linear movement to the piston 42. When the motor 43 is vertically disposed, the reduction gear unit may include a driving bevel gear 44 connected to the drive shaft of the motor 43, a driven bevel gear 45 perpendicularly combined with the driving bevel gear 44, an auxiliary gear 451 coaxially connected to the driven bevel gear 45 and a sector gear 46 combined with the auxiliary gear 451, where a rotation center of the sector gear 46 is connected to the rotation shaft 47.

The crank means may include a crank arm 48 of which an end portion is connected to the rotation shaft 47 and a connecting rod 49 of which an upper end portion is connected to the other end portion of the crank arm 48 and a lower end portion is connected to the piston 42.

In the air spring type suspension 30, a buffering operation absorbing the impact occurred on the drive may be performed by repeatedly compressing the operation gas in the air chamber 32a during alternation between compression and tensile strokes of the damper 36 in the cylinder 32, and an attenuating operation may be performed by resistance of the operation oil while the piston valve 161 at the end portion of the piston rod 16 moves in the damper 36. The operation gas compressed by the damper 36 in the air chamber 32a is partially ventilated to the buffer chamber 34a through the plurality of airing holes 321 of the cylinder 32 during the compression stroke, and the operation gas of the buffer chamber 34a is partially inserted into the air chamber 32a during the tensile stroke. Accordingly, a compensating operation preventing a drastic pressure change in the air chamber 32a due to the buffering operation may be also performed.

In the air spring type suspension 30, furthermore, since a single closed space is constituted by the connection of the air chamber 32a, the buffer chamber 34a and the control chamber 40a, the volume of the effective pressure space 40b of the control chamber 40a is changed by movement of the piston 42 of the accumulator module 40 and the pressure change of the air chamber 32a is induced by the volume change of the effective pressure space 40b.

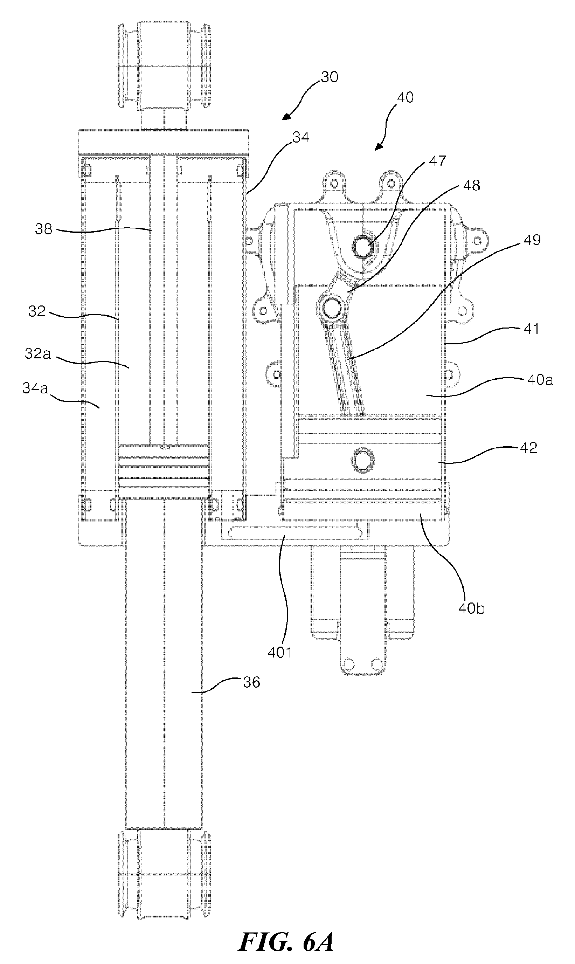

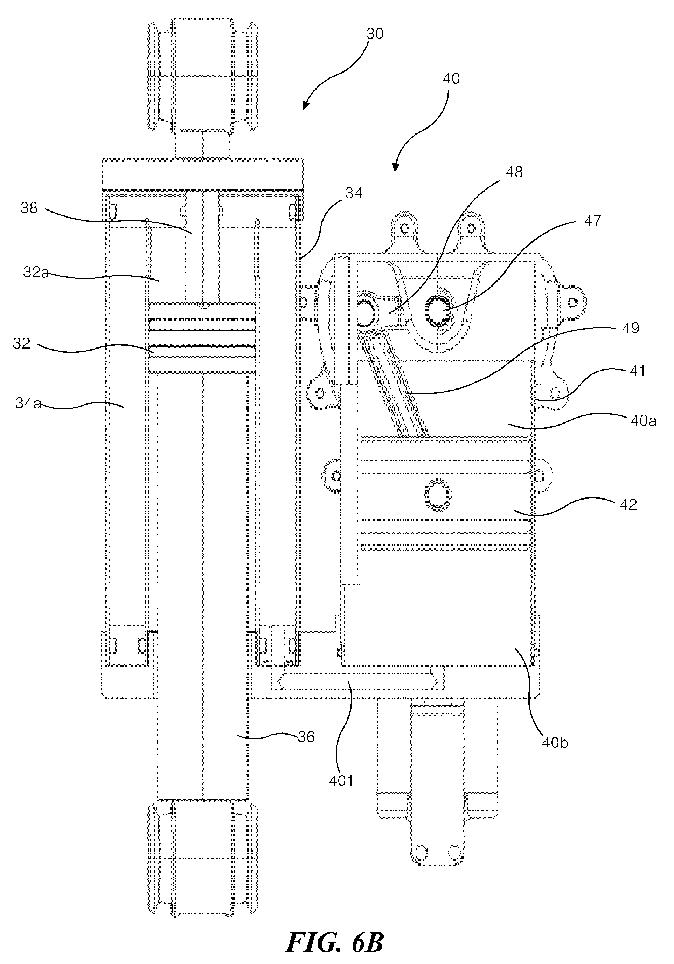

FIGs. 6A and 6B are cross-sectional views showing pressurization and depressurization operation states, respectively, in an air chamber of an air spring type suspension according to a first embodiment of the present invention.

In FIG. 6A, the driving bevel gear 44 connected to the drive shaft of the motor 43 is rotated along a predetermined direction by the motor 43, and the rotational movement of the driving bevel gear 44 is transmitted to the sector gear 46 through the driven gear 45 and the auxiliary gear 451. The rotation shaft 47 is rotated along a predetermined direction by the sector gear 46. In addition, the crank arm 48 connected to the rotation shaft 47 is downwardly rotated and the connecting rod 49 connected to the crank arm 48 moves downwardly. Since the piston 42 moves down, the volume of the effective pressure space 40b in the control chamber 40a is reduced and the operation gas in the control chamber 40a is pressurized to be supplied to the buffer chamber 34a through the airing path 401. When the pressure of the buffer chamber 34a increases by the supply of the operation gas from the control chamber 40a to the buffer chamber 34a, the operation gas in the buffer chamber 34a is supplied to the air chamber 32a through the plurality of airing holes 321 and the pressure of the air chamber 32a also increases. Accordingly, the volume of the air chamber 32a increases and the damper 36 moves down along an outputting direction, thereby the vehicle height increasing.

In FIG. 6B, since the drive shaft of the motor 43 is rotated along an opposite direction as compared with the pressurization state of the air chamber 32a, the reduction gear unit and the crank means are oppositely driven and the piston 42 moves up. As a result, the volume of the effective pressure space 40b in the control chamber 40a increases and the operation gas in the buffer chamber 34a is ventilated to the control chamber 40a through the airing path 401. In addition, the operation gas in the air chamber 32a is ventilated to the buffer chamber 34a through the plurality of airing holes 321. Accordingly, the volume of the air chamber 32a is reduced by reduction of the pressure of the air chamber 32a and the damper 36 moves up along an inputting direction, thereby the vehicle height decreasing.

In the air spring type suspension, therefore, since the outer tube 34 and the accumulator module 40 are formed to be adjacent to each other, the pressure of the air chamber 32a is immediately controlled by the movement of the piston 42.

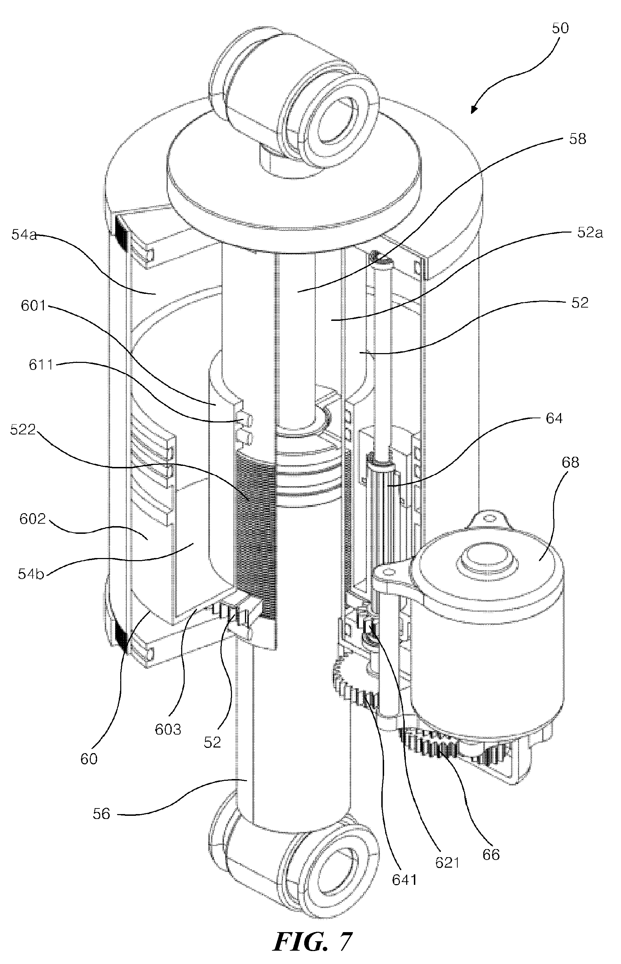

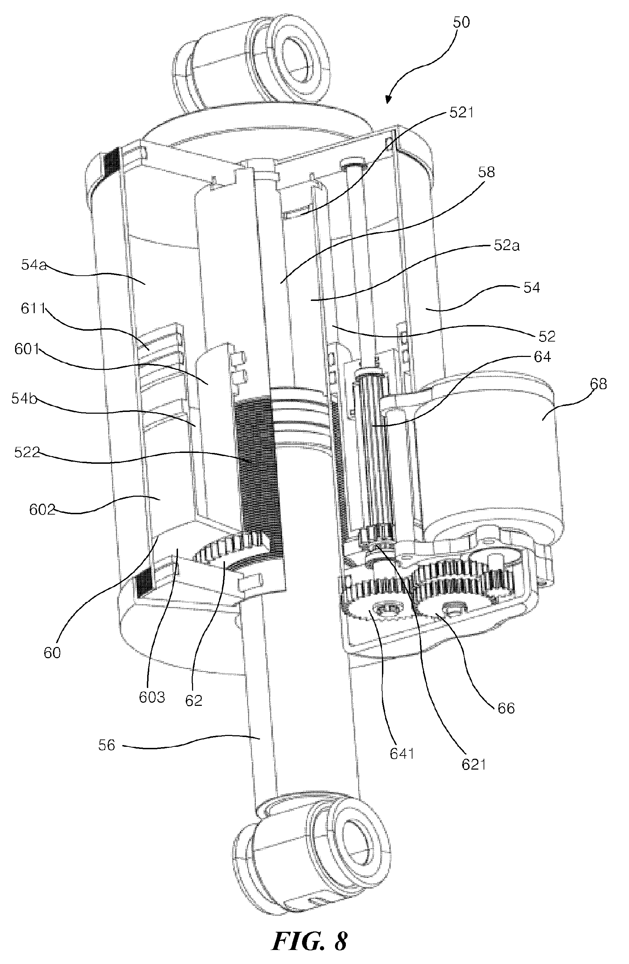

FIGs. 7 and 8 are perspective views showing an air spring type suspension according to a second embodiment of the present invention.

In FIGs. 7 and 8, an air spring type suspension 50 includes a cylinder 52 having an air chamber 52a filled with an operation gas, an outer tube 54 surrounding the cylinder 52 and constituting a buffer chamber 54a connected to the air chamber 52a outside the cylinder 52, a damper 56 capable of being inputted into and outputted from the air chamber 52a of the cylinder 52, a piston rod 58 disposed in the air chamber 52a of the cylinder 52 and inserted into the damper 56, a plunger 60 movable in the buffer chamber 54a and dividing an inner space of the buffer chamber 54a to define an effective pressure space 54b connected to the air chamber 52a and a driving means for moving the plunger 60.

A plurality of airing holes 521 are formed at an upper portion of the cylinder 52, and the air chamber 52a and the buffer chamber 54a are connected to each other through the plurality of airing holes 521 to constitute an air ventilation system. In addition, a screw thread portion 522 is formed on an outer surface of the cylinder 52.

The driving means may include a support gear 62 surrounding the outer surface of the cylinder 52, a control gear 621 combined with the support gear 62, a guide shaft 64 rotatable in the buffer chamber 54a and supporting the control gear 621 movable up and down, a driving gear 641 at an end portion of the guide shaft 64 and rotatable with the guide shaft 64, a reduction gear unit 66 combined with the control gear 621 and a motor connected to the reduction gear unit 66. The support gear 62 may have a spur gear shape and have a screw thread in an inner surface thereof so that the support gear 62 can support a lower portion of the plunger 60 by the combination of the screw thread of the support gear 62 and the screw thread portion 522 of the cylinder 52. In addition, the control gear 621 and the guide shaft may be combined with each other through a spline type such that the control gear 621 is rotatable with and movable along with the guide shaft 64.

The plunger 60 may have a cylinder shape surrounding the outer surface of the cylinder. In other words, the plunger 60 may have a donut shape having an open top surface and may include an inner portion 601 corresponding to the outer surface of the cylinder 52, an outer portion 602 corresponding to an inner surface of the outer tube 54 and a bottom portion connecting lower portions of the inner and outer portions 601 and 602. The inner portion 601 of the plunger 60 may have a vertical length sufficiently greater than a vertical distance of the screw thread portion 522. In addition, the inner portion 601 of the plunger 60 may have a first diameter sufficiently greater than a diameter of the cylinder 52 including the screw thread portion 522 in a portion corresponding to the screw thread portion 522 and may have a second diameter slightly greater than a diameter of the cylinder 52 in the other portion where the screw thread portion 522 is not formed. Accordingly, the inner portion 601 of the plunger 60 may be separated from the screw thread portion 522 of the cylinder 52 by a constant gap regardless of the position of the plunger 60, and may contact the outer surface of the cylinder 52 through a packing ring 611 in the other portion where the screw thread portion 522 is not formed. The plunger 60 may have various shape whenever the inner and outer portions 601 and 602 contact the outer surface of the cylinder 52 and the inner surface of the outer tube 54, respectively, to divide the buffer chamber 54a without interference of the screw thread portion 522 of the cylinder 52.

In the air spring type suspension 50, a buffering operation absorbing the impact occurred on the drive may be performed by repeatedly compressing the operation gas in the air chamber 52a during alternation between compression and tensile strokes of the damper 56 in the cylinder 52, and an attenuating operation may be performed by resistance of the operation oil while the piston valve at the end portion of the piston rod 58 moves in the damper 56. The operation gas compressed by the damper 56 in the air chamber 52a is partially ventilated to the buffer chamber 54a through the plurality of airing holes 521 of the cylinder 52 during the compression stroke, and the operation gas of the buffer chamber 54a is partially inserted into the air chamber 52a during the tensile stroke. Accordingly, a compensating operation preventing a drastic pressure change in the air chamber 52a due to the buffering operation may be also performed.

In the air spring type suspension 50, furthermore, since a single closed space is constituted by connection of the air chamber 52a and the effective pressure space 54b of the buffer chamber 54a, the volume of the effective pressure space 54b of the buffer chamber 54a is changed by movement of the plunger 60 and the pressure change of the air chamber 52a is induced by the volume change of the effective pressure space 54b.

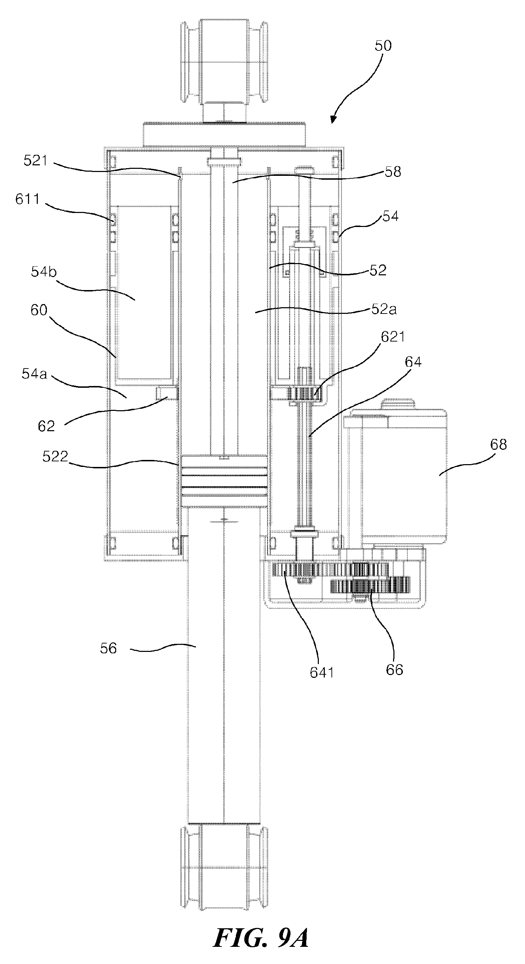

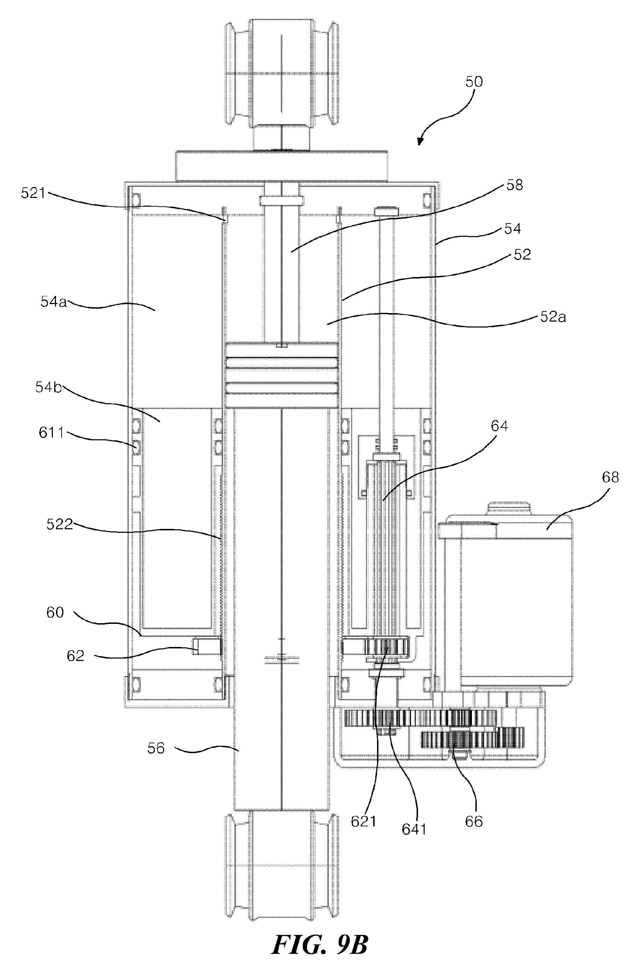

FIGs. 9A and 9B are cross-sectional views showing pressurization and depressurization operation states, respectively, in an air chamber of an air spring type suspension according to a second embodiment of the present invention.

In FIG. 9A, the driving force of the motor 48 is transmitted to the driving gear 641 through the reduction gear unit 66 connected to the motor 48, and the guide shaft 64 rotates according to the rotation of the driving gear 641. In addition, the support gear 62 combined with the control gear 621 rotates along a predetermined direction according to the rotation of the control gear 621 connected to the guide shaft 64, and the support gear 62 moves up along the cylinder 52 due to the combination of the screw thread of the inner surface of the support gear 62 and the screw thread portion 522 of the outer surface of the cylinder 52. Since the plunger 60 supported by the support gear 62 moves up and the volume of the effective pressure space 54b defined by the plunger 60 in the buffer chamber 54a is reduced, the operation gas in the buffer chamber 54a is supplied to the air chamber 52a through the plurality of airing holes 521 and the pressure of the air chamber 52a also increases. Accordingly, the volume of the air chamber 52a increases and the damper 56 moves down along an outputting direction, thereby the vehicle height increasing.

In FIG. 9B, since the motor 48 is driven along an opposite direction as compared with the pressurization state of the air chamber 52a, the reduction gear unit 66, the driving gear 641, the control gear 621 and the support gear 62 are oppositely driven and the support gear 62 moves down along the cylinder 52. Since the plunger 60 supported by the support gear 62 moves down, the volume of the effective pressure space 54b increases and the operation gas in the air chamber 52a is ventilated to the buffer chamber 54a. Accordingly, the volume of the air chamber 52a is reduced by reduction of the pressure of the air chamber 52a and the damper 56 moves up along an inputting direction, thereby the vehicle height decreasing.

In the air spring type suspension, therefore, since the plunger 60 is disposed in the outer tube 54 constituting the buffer chamber 54a, the pressure of the air chamber 52a is immediately controlled by the movement of the plunger 60.

In the air spring type suspension according to the present invention, consequently, since the elements controlling the pressure of the air chamber are integrated as one body, the structure of the vehicle is simplified and the durability of the vehicle is improved. In addition, since the pressure of the air chamber is immediately controlled, the response speed for the balancing function is improved. Therefore, the efficiency in design and fabrication of the vehicle is improved and the stability in drive is improved.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. An air spring type suspension, comprising:
a cylinder including an air chamber;
an outer tube surrounding the cylinder and constituting a buffer chamber outside the cylinder, the buffer chamber connected to the air chamber;
a damper capable of being inputted into and outputted from the air chamber;
a piston rod in the air chamber and inserted into the damper; and
an accumulator module constituting a control chamber connected to the buffer chamber,
wherein a single closed space is constituted by the air chamber, the buffer chamber and the control chamber, and
wherein a pressure change of the air chamber is induced by a pressure change of the control chamber.

2. The suspension according to claim 1, wherein the accumulator module comprises:
a chamber housing outside the outer tube and constituting the control chamber therein;
a piston movable up and down in the control chamber and dividing an inner space of the control chamber to define an effective pressure space, a volume of the effective pressure space changed according to a movement of the piston; and
a driving means for moving the piston,
wherein an operation gas is transmitted between the control chamber and the buffer chamber according to a change of the volume of the effective pressure space due to a movement of the piston.

3. The suspension according to claim 2, wherein the chamber housing is disposed to contact an outer surface of the outer tube, and an airing path connecting the buffer chamber and the control chamber is formed in the chamber housing.

4. The suspension according to claim 2, wherein the driving means comprises:
a motor;
a reduction gear unit connected to a drive shaft of the motor and reducing a rotation of the drive shaft;
a rotation shaft rotated by the reduction gear unit; and
a crank means converting a rotational movement of the rotation shaft into a linear movement and transmitting the linear movement to the piston.

5. An air spring type suspension, comprising:
a cylinder including an air chamber;
an outer tube surrounding the cylinder and constituting a buffer chamber connected to the air chamber outside the cylinder;
a damper capable of being inputted into and outputted from the air chamber;
a piston rod disposed in the air chamber and inserted into the damper;
a plunger movable in the buffer chamber and dividing an inner space of the buffer chamber to define an effective pressure space connected to the air chamber, a volume of the effective pressure space changed according to a movement of the plunger; and
a driving means for moving the plunger,
wherein a single closed space is constituted by the air chamber and the erective pressure space, and
wherein a pressure change of the air chamber is induced by a movement of the plunger.

6. The suspension according to claim 5, wherein the cylinder includes a screw thread portion on an outer surface thereof, and
wherein the driving means comprises:
a support gear surrounding the outer surface of the cylinder, the support gear having a spur gear shape and having a screw thread in an inner surface thereof so that the support gear can support a lower portion of the plunger by the combination of the screw thread of the support gear and the screw thread portion of the cylinder;
a control gear combined with the support gear;
a guide shaft rotatable in the buffer chamber and supporting the control gear movable up and down;
a driving gear at an end portion of the guide shaft and rotatable with the guide shaft;
a reduction gear unit combined with the control gear; and
a motor connected to the reduction gear unit.

7. The suspension according to claim 6, wherein the plunger has a cylinder shape surrounding the outer surface of the cylinder, and
wherein the plunger comprises:
an inner portion corresponding to the outer surface of the cylinder;
an outer portion corresponding to an inner surface of the outer tube: and
a bottom portion connecting the inner and outer portions.

8. The suspension according to claim 7, wherein an inner portion of the plunger has a vertical length greater than a vertical distance of the screw thread portion, and wherein the inner portion of the plunger is separated from the screw thread portion and contacts the cylinder in a portion except for the screw thread portion.
